(19) Europäisches Patentamt
European Patent Office
Office européen des brevets

(11) **EP 3 113 514 B1**

(12) **EUROPEAN PATENT SPECIFICATION**

(45) Date of publication and mention
of the grant of the patent:
**14.02.2024  Bulletin 2024/07**

(21) Application number: **15175137.7**

(22) Date of filing: **02.07.2015**

(51) International Patent Classification (IPC):
**H04R 25/00** (2006.01)     **G06F 21/10** (2013.01)

(52) Cooperative Patent Classification (CPC):
**H04R 25/55; G06F 21/44; H04R 2225/55**

(54) **HEARING DEVICE WITH MODEL CONTROL AND ASSOCIATED METHODS**

HÖRGERÄT MIT MODELLSTEUERUNG UND ZUGEHÖRIGE VERFAHREN

DISPOSITIF D'AIDE AUDITIVE AVEC CONTRÔLE DU MODÈLE ET PROCÉDÉS ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017  Bulletin 2017/01**

(60) Divisional application:
**23210514.8**

(73) Proprietor: **GN Hearing A/S
2750 Ballerup (DK)**

(72) Inventors:
• **PEDERSEN, Brian Dam
DK-4100 Ringsted (DK)**
• **VENDELBO, Allan Munk
DK-2500 Valby (DK)**

(74) Representative: **GN Store Nord A/S
Lautrupbjerg 7
2750 Ballerup (DK)**

(56) References cited:
**WO-A1-2007/098605     US-A1- 2002 054 689
US-A1- 2010 067 711     US-A1- 2012 140 962
US-B1- 6 556 686**

**Description**

The present disclosure relates to a hearing device with model control and associated methods, and in particular to method of operating a hearing device.

BACKGROUND

The developments within the hearing device industry leans towards using the same hardware for different hearing device models with different functionalities, e.g. in order to reduce production costs. Using the same hardware for different models however entails the need for hearing device manufacturers to be able to control and/or authorize the use of different models (software versions) in a selected hearing device.

US 2012/0140962 relates to a deactivatable hearing device, corresponding hearing system, and method for operating a hearing system. The hearing system (1) comprises at least one hearing device which comprises an operability control unit (3) and, operationally connectable thereto, a storage unit (4) in which operability data (5) are stored. The operability control unit (3) is structured and configured to either disable or not disable the hearing device (2) from functioning as a hearing device in dependence of the operability data (5), and the hearing system comprises no means for modifying the operability data (5), more particularly comprises no means for modifying the operability data stored in the storage unit (4). The method for operating a hearing system (1) comprises providing a hearing system (1) comprising at least one hearing device (2) comprising an operability control unit (3) and. operationally connected thereto a storage unit (4) in which operability data (5) are stored, wherein the hearing system comprises no means for modifying the operability data. In dependence of the operability data (5). the method comprises either disabling the hearing device (2) by means of the operability control unit (3) from functioning as a hearing device, or not doing so.

US 2010/0067711 relates to a method and system for manufacturing a hearing device with a customized feature set.

US 2002/0054689 relates to a method and system for remotely upgrading a hearing aid device.

WO 2007/098605 relates to a hearing aid system with remote activation and deactivation of modules.

US 6,556,686 relates to a programmable hearing aid device and method for operating a programmable hearing aid device.

SUMMARY

There is a need for a hearing device manufacturer to be able to control the configuration of hearing device hardware of a hearing device to operate as different models, e.g. with different software, e.g. in order to secure correct payment for a hearing device.

A hearing device is disclosed, the hearing device according to the invention comprising a processing unit configured to compensate for hearing loss of a user of the hearing device; and a memory unit. The memory unit has stored therein/comprises a hearing device identifier and model data comprising model information data indicative of available model(s) for the hearing device, the model information data comprising first model information and a digital signature, wherein the model data comprises a model name and a model identifier. The processing unit is configured to verify the model data, wherein to verify the model data comprises to verify the digital signature of the model information data and wherein to verify the model data comprises to perform a check function based on the hearing device identifier, the model name and the model identifier, wherein to perform the check function comprises applying one or more hash functions, and to determine if a verification criterion based on the hearing device identifier, the model name and the model identifier is fulfilled, wherein verification fails if the verification criterion is not met, wherein verification of the model data fails if the result of the check function does not match model information of the model information data. The processing unit is configured to proceed to a model update mode being a non-operative mode where the hearing device does not operate as a hearing device, if verification of the model data fails.

A method of fitting a hearing device at least useful for understanding the invention is disclosed. The hearing device comprises a processing unit and a memory unit, wherein the processing unit is configured to compensate for hearing loss of a user of the hearing device. The method comprises obtaining a hearing device identifier of the hearing device, e.g. with a fitting device; obtaining a model name, e.g. with the fitting device; obtaining a model identifier based on the model name and the hearing device identifier from a model identifier generator; and storing, e.g. with the fitting device, the model name and the model identifier in the memory unit.

Further, a method of fitting a hearing device at least useful for understanding the invention is disclosed, the hearing device comprising a processing unit configured to compensate for hearing loss of a user of the hearing device, a memory unit and an interface, the memory unit having a hearing device identifier stored therein. The method comprises obtaining model data from the hearing device, e.g. with a fitting device; verifying the model data, e.g. with the fitting device; and fitting the hearing device if verification of the model data succeeds. The methods of fitting a hearing device may be performed with a fitting device.

According to the invention a method of operating a hearing device comprising a processing unit configured to compensate for hearing loss of a user of the hearing device, a memory unit and an interface is disclosed. The memory unit has a hearing device identifier and model data comprising model information data indicative of available models for the hearing device stored therein. The model information data comprises first model information and a signature, the model data comprising a model name and a model identifier. The method comprises verifying the model data, e.g. at start-up, wherein verifying the model data comprises verifying the digital signature of the model information data, and wherein verifying the model data comprises to perform a check function based on the hearing device identifier, the model name and the model identifier, wherein to perform the check function comprises applying one or more hash functions, and to determine if a verification criterion based on the hearing device identifier, the model name and the model identifier is fulfilled, wherein verification fails if the verification criterion is not met, wherein verification of the model data fails if the result of the check function does not match model information of the model information data; determining whether verifying the model data fails; and proceeding to a model update mode being a non-operative mode where the hearing device does not operate as a hearing device, if verifying the model data fails.

The disclosed methods and apparatus facilitate that hearing device operation/fitting is authorized/controlled by a hearing device manufacturer. Further, the risk of a dispenser performing unauthorized fitting/model update is heavily reduced.

Advantageously, the present disclosure enables model upgrade/downgrade of a hearing device with proper payment to the hearing device manufacturer. Further, a hearing device manufacturer is able to control/monitor the model settings of a specific hearing device.

Further, the present disclosure enables unauthorized fitting of a hearing device to operate as a non-authorized/unpaid model, e.g. in a case where a dispenser clones/copies model data from another hearing device.

BRIEF DESCRIPTION OF THE DRAWINGS

The above and other features and advantages will become readily apparent to those skilled in the art by the following detailed description of exemplary embodiments thereof with reference to the attached drawings, in which:

Fig. 1    schematically illustrates an exemplary architecture with a hearing device,

Fig. 2    schematically illustrates an exemplary hearing device,

Fig. 3    schematically illustrates exemplary model data,

Fig. 4    schematically illustrates an exemplary signalling diagram at least useful for understanding the invention,

Fig. 5    schematically illustrates an exemplary signalling diagram at least useful for understanding the invention,

Fig. 6    schematically illustrates a flowchart of an exemplary method at least useful for understanding the invention,

Fig. 7    schematically illustrates a flowchart of an exemplary method at least useful for understanding the invention,

Fig. 8    schematically illustrates a flowchart of an exemplary method at least useful for understanding the invention, and

Fig. 9    schematically illustrates a flowchart of an exemplary method.

DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

The present disclosure relates to improved security of a hearing device. Namely, the hearing device disclosed herein is robust against security threats, vulnerabilities and attacks by implementing appropriate safeguards and countermeasures, such as security mechanisms, to protect against threats and attacks. The present disclosure relates to a hearing device that is robust against unauthorized access/fitting. Further, the hearing device and method(s) facilitate secure and correct model control of different models assignable to a hearing device.

The present disclosure relates to a hearing device. The hearing device comprises a processing unit, a memory unit and optionally an interface. The memory unit may include removable and non-removable data storage units including, but not limited to, Read Only Memory (ROM), Random Access Memory (RAM), hardware register(s), e.g. hardware registers of transceiver/radio and/or processing unit etc. The hearing device may comprise a processing unit configured to compensate for hearing loss of a user of the hearing device. The interface may comprise a wireless transceiver, e.g. configured for wireless communication at frequencies in the range from 2.4 to 2.5 GHz. In one or more exemplary hearing devices, the interface is configured for communication, such as wireless communication, with a client device or a hearing device, respectively comprising a wireless transceiver configured to receive and/or transmit data.

The hearing device/memory unit has a hearing device identifier stored therein. The hearing device identifier may refer to a unique identifier of the hearing device. As used herein the term "identifier" refers to a piece of data that is used for identifying, such as for categorizing, and/or uniquely identifying. The identifier may be in a form of a word, a number, a letter, a symbol, a list, an array or any combination thereof. For example, the identifier as a number may be in the form of an integer, such as unsigned integer, uint, with a length of e.g. 8 bits, 16 bits, 32 bits, etc., such as an array of unsigned integers.

The hearing device/memory unit has model data stored therein or is configured for storing model data therein. The model data comprises model information data indicative of available models of the hearing device, e.g. including a first model and/or a second model with features different from the features of the first model. For example, a first model may be able to wirelessly communicate with another hearing device, e.g. to form a binaural hearing system, while a second model is not able to communicate with another hearing device and thus intended to form a hearing system with a single hearing device. The model information data may be specific/unique for the hearing device, e.g. the model information data may be based on the hearing device identifier. Model information data may be stored in the memory unit during manufacture and/or during a fitting session at a dispenser. The model information data comprises first model information. The first model information is indicative of a model which the respective hearing device may be configured to operate as. The model information data is indicative of one or more models which the respective hearing device may be configured to operate as. The model information data may comprise second model information indicative of a model which the respective hearing device may be configured to operate as.

The model information data comprises a digital signature, so that a fitting device is able to verify or authenticate the model information data content and origin. The digital signature enables a proof or verification of authenticity of the model information data, such as verification of the signer legitimacy. The digital signature is optionally generated by a manufacturing device using a model information private key upon manufacturing of the hearing device. The hearing device and/or a fitting device may be configured to verify the digital signature. The digital signature is verifiable by the hearing device/fitting device using a corresponding model information public key. If the digital signature is not successfully verified using the alleged public key, verification of the model data fails. This may provide the advantage that the hearing device rejects model information data that is tampered or received from unauthenticated parties. Model information data may thus be robust against impersonation, modification and masquerading attacks.

The model data comprises a model name. The model name is indicative of the model of the hearing device. The model name may thus be indicative of the model which the hearing device is configured to operate as. As used herein the term "model name" refers to a piece of data that is used for identifying, such as for categorizing, and/or uniquely identifying a hearing device model. The model name may be in a form of a word, a number, a letter, a symbol, a list, an array or any combination thereof. For example, the model name as a number may be in the form of an integer, such as unsigned integer, uint, with a length of e.g. 8 bits, 16 bits, 32 bits, etc., such as an array of unsigned integers.

The model data comprises a model identifier. The model identifier may be based on the model name and/or the hearing device identifier. The model identifier may refer to a unique identifier of a hearing device model of a specific hearing device, e.g. the model identifier for a first hearing device configured as a first model may be different from the model identifier for a second hearing device configured as the first model, and/or the model identifier for a first hearing device configured as a first model may be different from the model identifier for the first hearing device configured as a second model.

The hearing device/memory unit may have a manufacture unit identifier stored therein. The manufacture unit identifier is optionally indicative of the manufacture unit used in manufacture or generation of the model information data and/or model identifier.

The processing unit is configured to verify the model data. To verify the model data is based on the model name and the model identifier.

To verify the model data and/or verifying the model data may comprise to determine if a verification criterion based on the hearing device identifier, the model name and the model identifier is fulfilled, wherein verification fails if the verification criterion is not met. The verification criterion may be based on the model information data. To determine if a verification criterion is fulfilled may comprise calculating one or more hash functions. By verifying the model data based on the hearing device identifier, a hearing device manufacturer is able to control available models for a specific hearing device, i.e. the model information data is based on the hearing device identifier.

To determine if a verification criterion is fulfilled may comprise to compare model information data, e.g. as indicated by the model name, with the result of a hash function, e.g. SHA-2, applied to the hearing device identifier, the model name and/or the model identifier.

In one or more exemplary hearing devices and/or method(s), if the model name is indicative of or points to first model information of the model information data, the verification criterion may be fulfilled or at least partly fulfilled if

$$MI_1 = hash(HD\_ID, M\_N, M\_ID),$$

where $MI_1$ is the first model information, hash is a hash function, such as SHA-2, HD_ID is the hearing device identifier, M_N is the model name and M_ID is the model identifier stored in the memory unit. Optionally, a manufacture unit identifier, MU_ID, may be included in the hash function.

In one or more exemplary hearing devices, if the model name is indicative of or points to second model information of the model information data, the verification criterion may be fulfilled or at least partly fulfilled if

$$MI_2 = hash(HD\_ID, M\_N, M\_ID, MU\_ID),$$

where $MI_2$ is the second model information, hash is a hash function, such as SHA-2, HD_ID is the hearing device identifier, M_N is the model name, M_ID is the model identifier, and MU_ID is manufacture unit identifier stored in the memory unit.

In one or more exemplary hearing devices and/or method(s), the verification criterion may be fulfilled or at least partly fulfilled if:

$$MI_i = hash(HD\_ID, M\_N, M\_ID, MU\_ID) \text{ for one of } i = 1, 2, \dots n,$$

wherein $MI_i$ is the i'th model information for the n different models included in the model information data, hash is a hash function, such as SHA-2, HD_ID is the hearing device identifier, M_N is the model name, M_ID is the model identifier, and MU_ID is manufacture unit identifier stored in the memory unit.

In one or more exemplary hearing devices and/or method(s), the verification criterion may be fulfilled or at least partly fulfilled if:

$$MI_i = hash(HD\_ID, M\_N, M\_ID, MU\_ID),$$

wherein $MI_i$ is the model information for the i'th model indicated by the model name and included in the model information data, hash is a hash function, such as SHA-2, HD_ID is the hearing device identifier, M_N is the model name, M_ID is the model identifier, and MU_ID is manufacture unit identifier stored in the memory unit.

To verify the model data and/or verifying the model data may comprise to perform a check function based on the hearing device identifier, the model name and the model identifier. To perform the check function comprises applying one or more hash functions. To verify the model data and/or verifying the model data may comprise to select model information corresponding to the model name. To verify the model data and/or verifying the model data may comprise to compare the result of the check function with the model information data, such as first model information and/or second model information. To verify the model data and/or verifying the model data may comprise to compare the result of the check function with the model information corresponding to the model name or all the model information of the model information data. Verification of the model data fails if the result of the check function does not match the corresponding model information. Verification of the model data fails if the result of the check function does not match any model information of the model information data.

To verify the model data and/or verifying the model data may comprise to perform a check function based on the manufacture unit identifier.

The processing unit is configured to proceed to a model update mode if verification of the model data fails. In the model update mode, the hearing device is non-operative and may send an acoustic signal indicative of the hearing device being in model update mode.

In one or more exemplary methods of fitting a hearing device, the method comprises obtaining a hearing device identifier of the hearing device. Obtaining a hearing device identifier may comprise receiving, e.g. in a fitting device, the hearing device identifier from the memory unit of the hearing device.

In one or more exemplary methods of fitting a hearing device, the method comprises obtaining a model name, e.g. with a fitting device. Obtaining a model name may comprise receiving user input with a fitting device, the user input being indicative of model name. In one or more exemplary methods of fitting a hearing device, the method comprises obtaining model information data from the hearing device and/or determining if model information data is present.

The method may comprise obtaining a model identifier based on the model name and the hearing device identifier from a model identifier generator. Obtaining a model identifier may comprise transmitting a model identifier request comprising the model name and the hearing device identifier to the model identifier generator, and receiving a model identifier response comprising the model identifier from the model identifier generator. The model identifier generator may be a server device controlled by the hearing device manufacturer. The model identifier generator is a device configured to generate the model identifier, such as a manufacturing device, e.g. an integrated circuit card, a smart card, a hardware security module.

The method may comprise storing the model name and the model identifier in the memory unit of the hearing device.

The method may comprise obtaining model information data, e.g. from a server device/ model identifier generator, based on the hearing device identifier and storing the model information data in the memory unit, e.g. if a first update criterion is met. The first update criterion may be met if the memory unit of the hearing device does not contain model information data or if the model information data are corrupted, e.g. if the signature is not verified. The first update criterion may be met if the model information data does not contain model information corresponding to the obtained model name. Obtaining model information data may comprise transmitting a model information data request comprising the hearing device identifier and/or the obtained model name, e.g. to a model information data generator, and receiving a model information data response comprising the model information data from the model information data generator. The model information data generator may be a server device controlled by the hearing device manufacturer. The model information data generator is a device configured to generate the model information data, such as a manufacturing device, e.g. an integrated circuit card, a smart card, a hardware security module.

In one or more exemplary methods, obtaining a model identifier and storing the model name and the model identifier is performed if a second update criterion is met. The second update criterion may be met if the memory unit of the hearing device does not contain a model identifier, e.g. if model identifier is a default value, such as zero. The second update criterion may be met if a model name of the memory unit is different from the obtained model name.

The method may comprise retrieving model data, such as model name, model identifier and/or model information data from the memory unit; verifying the model data, optionally including verifying a signature of the model information data, verifying the model name and the model identifier based on the model information data and the hearing device identifier; and aborting fitting if verifying the model data, e.g. verifying the signature, the model name or the model identifier, fails.

The method may comprise fitting hearing device parameters according to the model name, e.g. if verifying the signature, the model name and the model identifier succeds, i.e. the signature, the model name and the model identifier are verified.

In the method of operating a hearing device, verifying the model data comprises verifying the signature of the model information data. In the method of operating a hearing device, the model data comprises a model name and a model identifier, and verifying the model data comprises verifying the model data based on the model name and the model identifier.

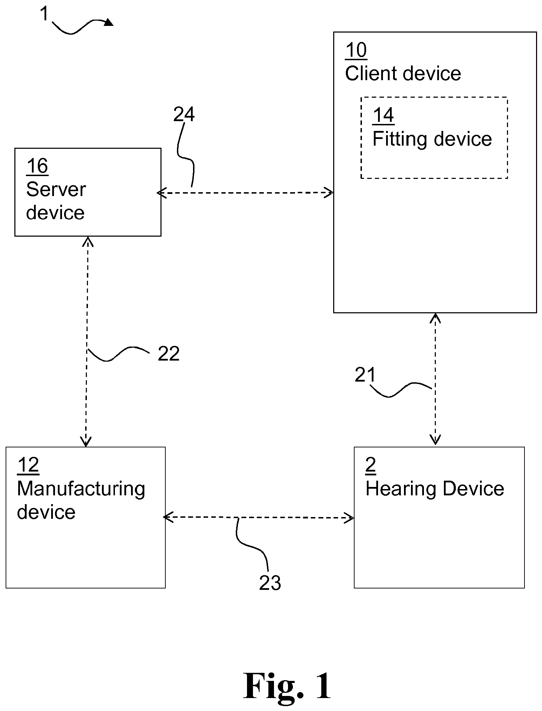

Fig. 1 schematically illustrates exemplary devices that may be used for manufacturing, maintenance/update of, and/or operating a hearing device 2. Fig. 1 shows an exemplary system 1 and a hearing device 2. The system 1 may comprise one or more of a manufacturing device 12, a client device 10 and/or fitting device 14, and a server device 16 for manufacturing, maintenance/update of, and/or operating the hearing device 2 optionally including but not limited to configuration of a hearing device to operate as a desired hearing device model. The manufacturing device 12 may be configured to store a hearing device identifier in the hearing device 2. The manufacturing device 12 and/or the fitting device 14 may be configured to store model data in the hearing device 2. The manufacturing device 12 and/or the fitting device 14 may be configured to store a model name and/or a model identifier based on the model name and the hearing device identifier in the hearing device 2. The hearing device 2 may be configured to compensate for hearing loss of a user of the hearing device 2. The hearing device 2 may be configured to communicate with the manufacturing device 12 using e.g. a communication link 23, such as a uni or bi-directional communication link. The communication link 23 may be a wired link and/or wireless communication link. The communication link 23 may be a single hop communication link or a multi-hop communication link. The wireless communication link may be carried over a short-range communication system, such as Bluetooth, Bluetooth low energy, IEEE 802.11, Zigbee. The hearing device 2 may be configured to receive model data from the manufacturing device 12 and to store the model data in the memory unit comprised in the hearing device 2, e.g. as part of primary security settings. Alternatively or additionally, the manufacturing device 12 may store the model data directly in the memory unit of the hearing device. For example, the manufacturing device 12 may write the model data in the memory unit. For example, during manufacturing of the hearing device 2, the manufacturing device 12 connects to the hearing device 2 and transmits the model to the hearing device 2. The hearing device may receive and store the model data. The hearing device 2 may then use the material provided in the model data to secure authorized operation of the hearing device. The hearing device 2 may be configured to connect to the client device 10/fitting device 14 via a communication link 21, such as a bidirectional communication link. The communication link 21 may be a wired link and/or wireless communication link. The communication link 21 may be a single hop communication link or a multi hop communication link. The wireless communication link may be carried over a short-range communication system, such as Bluetooth, Bluetooth low energy, IEEE 802.11, Zigbee. The hearing device 2 may configured to connect to the client device 10/fitting device 14 over a network. The client device 10 may permit remote fitting of the hearing aid device where a dispenser connects to the hearing device via the client device 10 of the user. The client device 10 may comprise a computing device acting as a client, such as a fitting device 14 (e.g. a handheld device, a relay, a tablet, a personal computer, a mobile phone, and/or USB dongle plugged in a personal computer). The client device 10/fitting device 14 may be configured to communicate with the server device 16 (model identifier generator) via a communication link 24, such as a bidirectional communication link. The communication link 24 may be a wired link and/or wireless communication link. The communication link 24 may comprise a network, such as the Internet. The client device 10/fitting device 14 may be configured to communicate with the server device 16 for maintenance, and update purposes. The server device 16 (model identifier generator) may comprise a computing device configured to act as a server, i.e. to serve requests from the client device 10 and/or from the hearing device 2. The server device 16 may be controlled by the hearing device manufacturer. The server device 16 may be configured to communicate with the manufacturing device 12 via a communication link 22 for manufacturing maintenance, and/or operational purposes. The server device 16 and the manufacturing device 12 may be co-located and/or form one entity for manufacturing maintenance, and/or operational purposes of the hearing device 2.

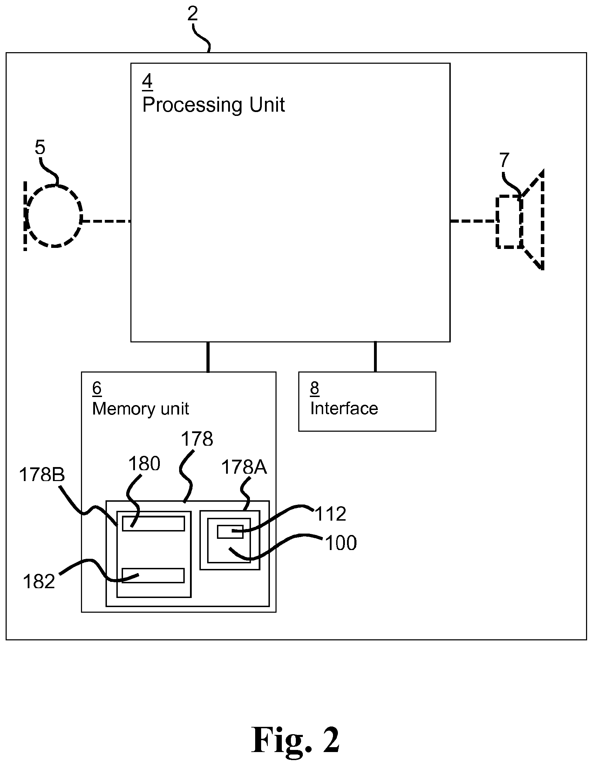

Fig. 2 schematically illustrates an exemplary hearing device 2. The hearing device 2 comprises a processing unit 4, a memory unit 6 and an interface 8. The hearing device 2 comprises a processing unit 4 configured to compensate for hearing loss of a user of the hearing device 2. The interface 8 optionally comprises a wireless transceiver, e.g. configured for wireless communication at frequencies in the range from 2.4 to 2.5 GHz. The interface 8 is configured for communication, such as wired and/or wireless communication, with a manufacturing device 12 and/or a client device 10/fitting device 14. The processing unit 4 may be configured to compensate for hearing loss of a user of the hearing aid according to data received during manufacture and/or fitting. The hearing device 2 optionally comprises a microphone 5 or a plurality of microphones for receiving sound signal(s) and converting sound signal(s) into converted sound signal(s). In one or more exemplary hearing devices, a wireless transceiver of the interface may also provide one or more converted sound signal(s), e.g. from an external sound source such as a mobile phone or sound system with wireless transmitter, to the processing unit. The converted sound signal(s) may be an electrical and/or digital version of the sound signal. The processing unit 4 is configured to receive and process the converted sound signal(s) into a processed sound signal according to a hearing loss of a user of the hearing device 2. The processed sound signal may be compressed and/or amplified or the like. The hearing device 2 comprises an output transducer/loudspeaker 7, known as a receiver. The receiver 7 is configured to receive the processed sound signal and convert the processed sound signal to an output sound signal for reception by an eardrum of the user. The hearing device is optionally configured to operate according to security settings 178 of the hearing device. The security settings 178 may comprise primary security settings 178A optionally comprising a hearing device certificate 100. In one or more exemplary hearing devices, the hearing device certificate 100/security settings 178 comprise hearing device identifier 112 and/or a digital signature to enable verification of the content of the hearing device certificate. The hearing device certificate 100 may comprise keying material for securing communication with e.g. client device 10/fitting device 14. Optionally, the security settings 178 comprises secondary security settings 178B, e.g. including one or more operational parameters of the hearing device. The model name and/or model identifier may be stored in/form part of the primary security settings and/or the secondary security settings. The memory unit 6 may include removable and non-removable data storage units including, but not limited to, Read Only Memory (ROM), Random Access Memory (RAM), etc. The memory unit 6 has stored therein or is at least configured to store a hearing device identifier 112, e.g. as part of the primary security settings 178A/hearing device certificate 100. The memory unit 6 has stored therein or is at least configured to store model data 180, e.g. as part of security settings 178. The model data 180 comprises model information data indicative of one or more available models for the hearing device, wherein the model information data comprises first model information and a digital signature.

The model data 180 comprises a model name and a model identifier, and the processing unit 4 is configured to verify the model data based on the model name and the model identifier. The model name and model identifier may be stored in the memory unit 6 during fitting of the hearing device, i.e. at the dispenser using a fitting device. A default model name and a default model identifier according to the default model name and the hearing device identifier may be stored in the memory unit during manufacture. Subsequently, the model name and the model identifier may be updated during fitting, e.g. using method(s) as described herein. Optionally, the memory unit 6 has stored therein or is at least configured to store a manufacture unit identifier 182 indicative of the manufacture unit used for manufacture of the hearing device.

The processing unit 4 is configured to verify the model data 180 based on one or more of the model information data, e.g. first model information and/or digital signature, the model name, the model identifier and the manufacture unit identifier 182. The processing unit is configured to proceed to a model update mode if verification of the model data fails. The model update mode is a non-operative mode, i.e. where the hearing device does not operate as a hearing device.

The processing unit 4 is configured to verify the digital signature of the model information data and check/verify that a verification criterion is fulfilled. The model data are then verified or at least partly verified if the digital signature of the model information data is verified and the verification criterion is met. In one or more exemplary hearing devices, the verification criterion is met if $MI_i = hash(HD\_ID, M\_N, M\_ID, MU\_ID)$ for one of i = 1, 2, ... n, wherein $MI_i$ is the i'th model information for the n different models included in the model information data, hash is a hash function, such as SHA-2, HD_ID is the hearing device identifier, M_N is the model name, M_ID is the model identifier, and MU_ID is manufacture unit identifier stored in the memory unit. In one or more exemplary hearing devices, the verification criterion is met if $MI_i = hash(HD\_ID, M\_N, M\_ID, MU\_ID)$, wherein $MI_i$ is the i'th model information for the i'th model indicated by the model name.

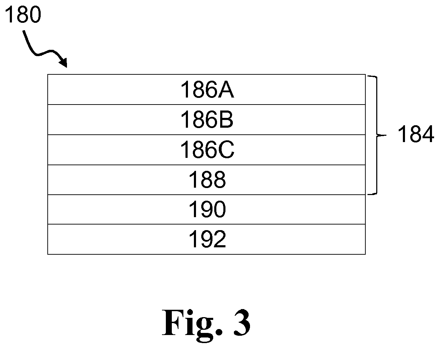

Fig. 3 schematically illustrates exemplary model data 180 of a hearing device/stored in a hearing device. The model data 180 comprises model information data 184 comprising model information 186A, 186B, 186C for three different models. The model information 186A, 186B, 186C is unique for the respective hearing device since it is based on the hearing device identifier. Further, the model data 180 comprises or is configured to comprise model name 190 and model identifier 192. The model identifier 192 is based on the hearing device identifier, the model name 190, and a model information private key of the hearing device manufacturer, e.g. given as:

$$M\_ID = hash(HD\_ID, M\_N, MI\_PK),$$

where M_ID is the model identifier, hash is a hash function, HD_ID is the hearing device identifier, M_N is the model name and MI_PK is the model information private key, e.g. held by a model identifier generator. The model name and the model identifier may be assigned to the hearing device during fitting, e.g. using a method as described herein or during manufacture.

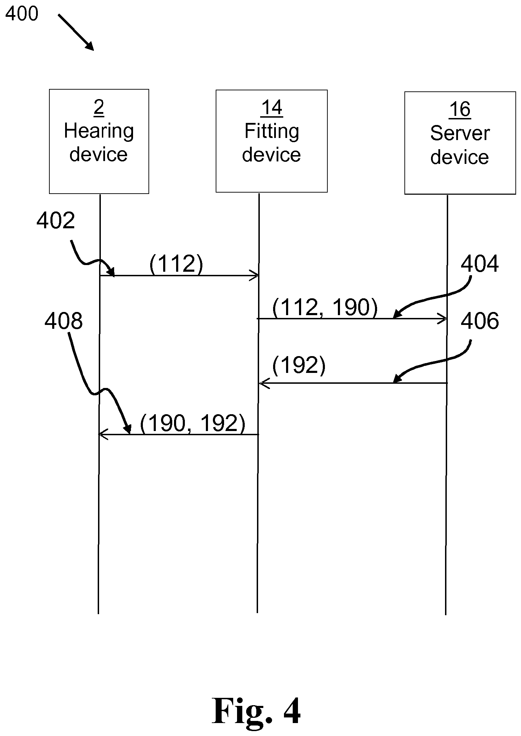

Fig. 4 is an exemplary signalling diagram 400 illustrating an exemplary method of wirelessly fitting a hearing device at least useful for understanding the invention. Fitting device 14 obtains hearing device identifier 112 by receiving a HD_ID message 402 including the hearing device identifier 112 from hearing device 2. The fitting device 14 obtains a model name from a user interface of the fitting device by a dispenser/using indicating the desired model name of the hearing device and obtains a model identifier 192 by transmitting a M_ID request 404 including hearing device identifier 112 and model name 190 or data indicative thereof to server device 16 acting as model identifier generator. The model identifier generator generates model identifier 192 to the fitting device based on the hearing device identifier, the model name 190, and a model information private key of the hearing device manufacturer and transmits model identifier 192 in a model identifier response 406. Thereby, the manufacturer is able to control which hearing devices are operating which models and to prevent cloning of a hearing device model for one hearing device to other devices. The model name 190 and the model identifier 192 are then stored in the hearing device 2 by sending an update request 408 including the model name 190 and the model identifier 192 to the hearing device 2.

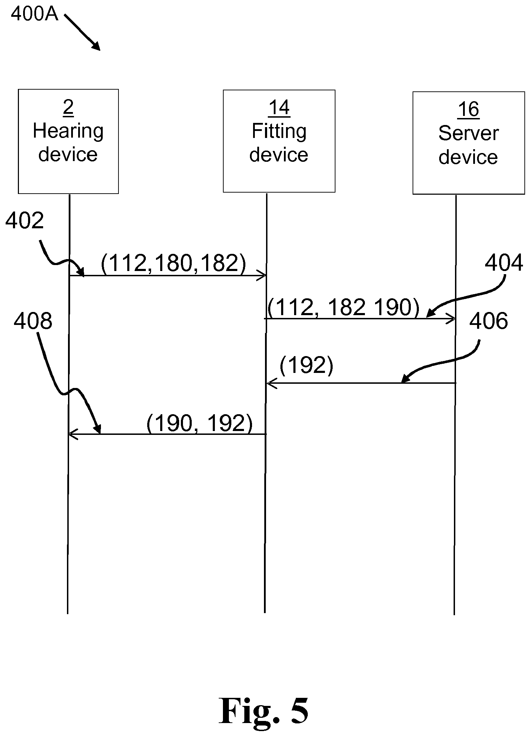

Fig. 5 is an exemplary signalling diagram 400A illustrating an exemplary method of wirelessly fitting a hearing device at least useful for understanding the invention. The method comprises obtaining, with the fitting device 14, model data 180 and/or manufacture unit identifier 182, e.g. by including the model data 180 and/or manufacture unit identifier 182 in the hearing device identifier message 402. Thereby a fitting device 14 is able to determine if an update of the model data, such as model information data, model name and/or model identifier is necessary.

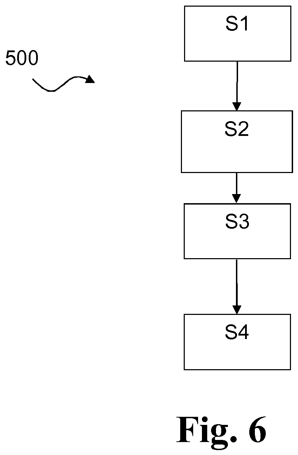

Fig. 6 illustrates a flowchart of an exemplary method of fitting a hearing device at least useful for understanding the invention, the hearing device comprising a processing unit and a memory unit, wherein the processing unit is configured to compensate for hearing loss of a user of the hearing device. The method 500 comprises obtaining S1 a hearing device identifier of the hearing device and obtaining S2 a model name, e.g. from a user interface of a fitting device. Obtaining S1 a hearing device identifier of the hearing device optionally comprises receiving the hearing device identifier from the hearing device, e.g. via a wireless connection. The method proceeds to obtaining S3 a model identifier based on the model name and the hearing device identifier from a model identifier generator; and storing S4 the model name and the model identifier in the memory unit of the hearing device.

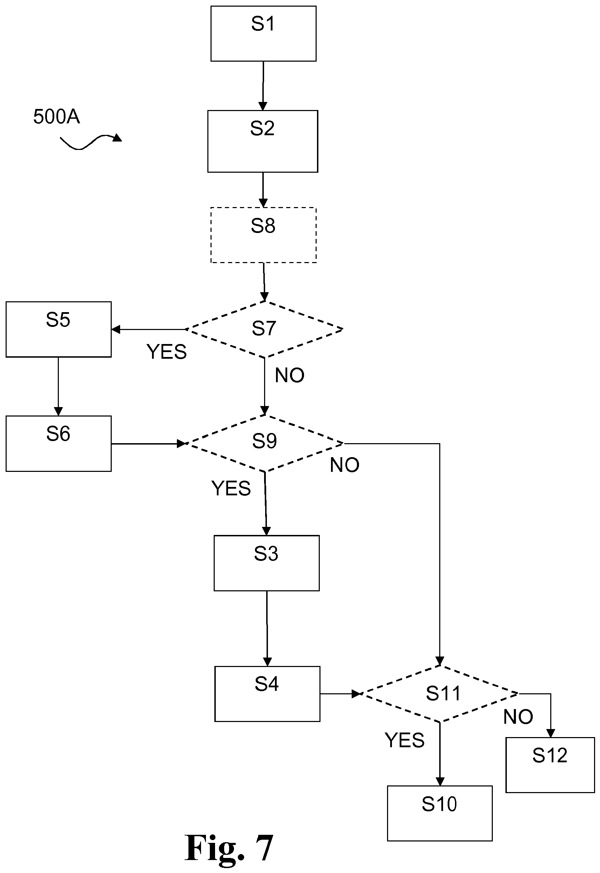

Fig. 7 illustrates a flowchart of an exemplary method of fitting a hearing device at least useful for understanding the invention, the hearing device comprising a processing unit and a memory unit, wherein the processing unit is configured to compensate for hearing loss of a user of the hearing device. Optionally, the method 500A comprises obtaining S5 model information data based on the hearing device identifier, e.g. from a server device/model identifier generator and storing S6 the model information data in the memory unit if a first update criterion S7 is met. The method 500A may comprise obtaining S8 model data including model information data from the hearing device. The first update criterion S7 may be met if the hearing device does not contain model information data, such as first model information or signature, or the digital signature of the model information data cannot be verified/is not valid. In the method 500A, obtaining S3 a model identifier and storing S4 the model name and the model identifier is performed if a second update criterion S9 is met. The second update criterion S9 may be met if the model name obtained in S2 differs from the model name of model data obtained from the hearing device in S8. The second update criterion S9 may be met if model identifier of model data obtained from the hearing device in S8 is not present or has a default value, such as zero. If the second update criterion S9 is not met, the method proceeds to fitting S10 hearing device parameters according to the model name either directly or if the model data of the memory unit are optionally verified in S11. The method optionally comprises aborting S12 fitting if verifying S11 the model data, such as the signature, the model name or the model identifier fails.

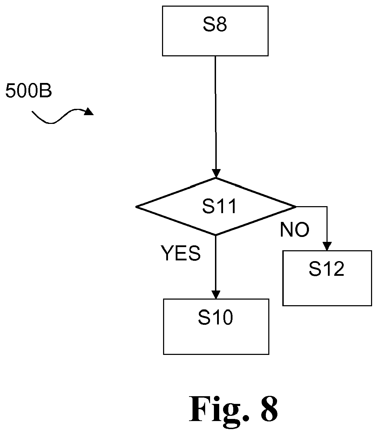

Fig. 8 illustrates a flowchart of an exemplary method of fitting a hearing device at least useful for understanding the invention, the hearing device comprising a processing unit configured to compensate for hearing loss of a user of the hearing device, a memory unit and optionally an interface, the memory unit having a hearing device identifier stored therein. The method 500B comprises obtaining S8 model data from the hearing device and verifying S11 the model data. If verification of the model data succeeds in S11, the method 500B proceeds to fitting S10 the hearing device. If verification of the model data fails in S11, the method 500B optionally proceeds to aborting S12 fitting of the hearing device.

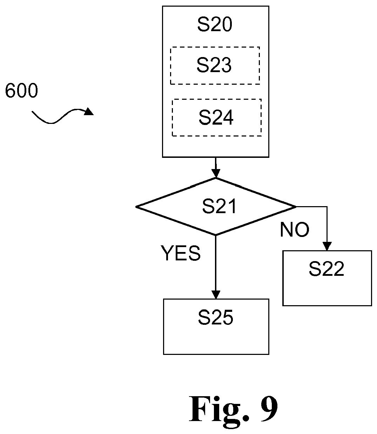

Fig. 9 illustrates a flowchart of an exemplary method of operating a hearing device comprising a processing unit configured to compensate for hearing loss of a user of the hearing device, a memory unit and an interface, the memory unit having a hearing device identifier and model data comprising model information data indicative of available models for the hearing device stored therein, the model information data comprising first model information and a signature. The method 600 comprises verifying S20 the model data. If verifying S20 the model data fails (no verification) as determined in S21, the method comprises proceeding S22 to a model update mode.

Verifying S20 the model data comprises verifying S23 the signature of the model information data and verifying S24 the model data based on model name and model identifier of the model data. The method proceeds to normal operation S25 if verifying S20 the model data succeeds.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

**Claims**

1. A hearing device (2) comprising

   - a processing unit (4) configured to compensate for hearing loss of a user of the hearing device; and
   - a memory unit (6),
   wherein the memory unit (6) has stored therein:

      - a hearing device identifier (112);

   **characterized in that** the memory unit (6) has stored therein:

      - model data (180) comprising model information data (184) indicative of available models for the hearing device, the model information data comprising first model information (186A) and a digital signature (188), wherein the model data (180) comprises a model name (190) and a model identifier (192), and

   wherein the processing unit is configured to:

      - verify the model data (180), wherein to verify the model data (180) comprises to verify the digital signature (188) of the model information data and wherein to verify the model data (180) comprises to perform a check function based on the hearing device identifier, the model name and the model identifier, wherein to perform the check function comprises applying one or more hash functions, and to determine if a verification criterion based on the hearing device identifier, the model name and the model identifier is fulfilled, wherein verification of the model data fails if the verification criterion is not met, wherein the verification criterion is not met if the result of the check function does not match model information of the model information data, and

- proceed to a model update mode being a non-operative mode where the hearing device does not operate as a hearing device, if verification of the model data (180) fails.

2. Hearing device according to claim 1, wherein to verify the model data comprises to select model information corresponding to the model name and to compare the result of the check function with the model information corresponding to the model name, and wherein verification of the model data fails if the result of the check function does not match the corresponding model information.

3. Hearing device according to any of the preceding claims, wherein the memory unit has a manufacture unit identifier (182) stored therein, and wherein to verify the model data is based on the manufacture unit identifier (182).

4. Method (600) of operating a hearing device comprising a processing unit configured to compensate for hearing loss of a user of the hearing device, a memory unit and an interface, the memory unit having a hearing device identifier stored therein, **characterized in that** the memory unit having model data comprising model information data indicative of available models for the hearing device stored therein, the model information data comprising first model information and a digital signature, the model data comprising a model name and a model identifier, wherein the method comprises

- verifying (S20) the model data, wherein verifying the model data comprises verifying (S23) the digital signature of the model information data and verifying the model data (S24), wherein verifying the model data comprises to perform a check function based on the hearing device identifier, the model name and the model identifier, wherein to perform the check function comprises applying one or more hash functions, and to determine if a verification criterion based on the hearing device identifier, the model name and the model identifier is fulfilled, wherein verifying the model data fails if the verification criterion is not met, wherein the verification criterion is not met if the result of the check function does not match model information of the model information data;
- determining (S21) whether verifying the model data fails; and
- proceeding (S22) to a model update mode being a non-operative mode where the hearing device does not operate as a hearing device, if verifying the model data fails.

**Patentansprüche**

1. Ein Hörgerät (2), umfassend:

- eine Verarbeitungseinheit (4), die dazu konfiguriert ist, einen Hörverlust eines Benutzers des Hörgeräts zu kompensieren; Und
- eine Speichereinheit (6),
wobei in der Speichereinheit (6) Folgendes gespeichert ist:

- eine Hörgerätekennung (112);

**gekennzeichnet durch** dass in der Speichereinheit (6) Folgendes gespeichert ist:

- Modelldaten (180), die Modellinformationsdaten (184) umfassen, die verfügbare Modelle für das Hörgerät angeben, wobei die Modellinformationsdaten erste Modellinformationen (186A) und eine digitale Signatur (188) umfassen, wobei die Modelldaten (180) ein Modell umfassen Name (190) und eine Modellkennung (192) und

wobei die Verarbeitungseinheit dazu konfiguriert ist:

- Verifizieren der Modelldaten (180), wobei das Verifizieren der Modelldaten (180) das Verifizieren der digitalen Signatur (188) der Modellinformationsdaten umfasst und wobei das Verifizieren der Modelldaten (180) das Durchführen einer Prüffunktion basierend auf diesen umfasst Hörgerätekennung, den Modellnamen und die Modellkennung, wobei das Durchführen der Prüffunktion das Anwenden einer oder mehrerer Hash-Funktionen umfasst und um zu bestimmen, ob ein Verifizierungskriterium basierend auf der Hörgerätekennung, dem Modellnamen und der Modellkennung erfüllt ist, wobei die Überprüfung der Modelldaten fehlschlägt, wenn das Überprüfungskriterium nicht erfüllt ist, wobei das Überprüfungskriterium nicht erfüllt ist, wenn das Ergebnis der Prüffunktion nicht mit den Modellinformationen der Modellinformationsdaten übereinstimmt, und

- Fahren Sie mit einem Modellaktualisierungsmodus fort, der ein nicht operativer Modus ist, in dem das Hörgerät nicht als Hörgerät arbeitet, wenn die Überprüfung der Modelldaten (180) fehlschlägt.

2. Hörgerät nach Anspruch 1, wobei das Verifizieren der Modelldaten umfasst, Modellinformationen auszuwählen, die dem Modellnamen entsprechen, und das Ergebnis der Prüffunktion mit den Modellinformationen zu vergleichen, die dem Modellnamen entsprechen, und wobei das Verifizieren des Modells umfasst data schlägt fehl, wenn das Ergebnis der Prüffunktion nicht mit den entsprechenden Modellinformationen übereinstimmt.

3. Hörgerät nach einem der vorhergehenden Ansprüche, wobei in der Speichereinheit eine Herstellereinheitskennung (182) gespeichert ist und wobei die Überprüfung der Modelldaten auf der Herstellereinheitskennung (182) basiert.

4. Verfahren (600) zum Betreiben eines Hörgeräts, umfassend eine Verarbeitungseinheit, die dazu konfiguriert ist, einen Hörverlust eines Benutzers des Hörgeräts zu kompensieren, eine Speichereinheit und eine Schnittstelle, wobei in der Speichereinheit eine Hörgerätekennung gespeichert ist,
**dadurch gekennzeichnet**
Die Speichereinheit verfügt über darin gespeicherte Modelldaten, die Modellinformationsdaten umfassen, die auf verfügbare Modelle für das Hörgerät hinweisen, wobei die Modellinformationsdaten erste Modellinformationen und eine digitale Signatur umfassen, wobei die Modelldaten einen Modellnamen und eine Modellkennung umfassen, wobei das Verfahren Folgendes umfasst:

- Verifizieren (S20) der Modelldaten, wobei das Verifizieren der Modelldaten das Verifizieren (S23) der digitalen Signatur der Modellinformationsdaten und das Verifizieren der Modelldaten (S24) umfasst, wobei das Verifizieren der Modelldaten das Durchführen einer Prüffunktion basierend auf dem Gehör umfasst Gerätekennung, den Modellnamen und die Modellkennung, wobei das Durchführen der Prüffunktion das Anwenden einer oder mehrerer Hash-Funktionen umfasst und um zu bestimmen, ob ein Verifizierungskriterium basierend auf der Hörgerätekennung, dem Modellnamen und der Modellkennung erfüllt ist, wobei das Verifizieren der Modelldaten schlägt fehl, wenn das Verifizierungskriterium nicht erfüllt ist, wobei das Verifizierungskriterium nicht erfüllt ist, wenn das Ergebnis der Prüffunktion nicht mit den Modellinformationen der Modellinformationsdaten übereinstimmt;
- Bestimmen (S21), ob die Überprüfung der Modelldaten fehlschlägt; Und
- Weitergehen (S22) zu einem Modellaktualisierungsmodus, der ein nicht operativer Modus ist, in dem das Hörgerät nicht als Hörgerät arbeitet, wenn die Überprüfung der Modelldaten fehlschlägt.

**Revendications**

1. Appareil auditif (2) comprenant

- une unité de traitement (4) configurée pour compenser la perte auditive d'un utilisateur du dispositif auditif ; et
- une unité de mémoire (6),
dans lequel l'unité de mémoire (6) contient :

- un identifiant de dispositif auditif (112) ;

**caractérisé en** que l'unité mémoire (6) a stocké :

- des données de modèle (180) comprenant des données d'informations de modèle (184) indicatives des modèles disponibles pour le dispositif auditif, les données d'informations de modèle comprenant des premières informations de modèle (186A) et une signature numérique (188), les données de modèle (180) comprenant un modèle un nom (190) et un identifiant de modèle (192), et

dans lequel l'unité de traitement est configurée pour :

- vérifier les données de modèle (180), la vérification des données de modèle (180) comprenant la vérification de la signature numérique (188) des données d'informations de modèle et la vérification des données de modèle (180) comprenant l'exécution d'une fonction de vérification basée sur un identifiant de dispositif auditif, le nom de modèle et l'identifiant de modèle, la réalisation de la fonction de vérification comprenant l'application d'une ou plusieurs fonctions de hachage, et la détermination si un critère de vérification basé sur l'identifiant de dispositif auditif, le nom de modèle et l'identifiant de modèle est rempli, dans lequel la vérification des données de modèle échoue si le critère de vérification n'est pas satisfait, dans lequel le critère de vérification n'est pas satisfait si le résultat de la fonction de vérification ne correspond pas aux informations de modèle des données d'informations de modèle, et

- passer à un mode de mise à jour de modèle qui est un mode non opérationnel dans lequel le dispositif auditif ne fonctionne pas comme un dispositif auditif, si la vérification des données de modèle (180) échoue.

2. Appareil auditif selon la revendication 1, dans lequel la vérification des données de modèle comprend la sélection des informations de modèle correspondant au nom du modèle et la comparaison du résultat de la fonction de vérification avec les informations de modèle correspondant au nom du modèle, et dans lequel la vérification du modèle les données échouent si le résultat de la fonction de vérification ne correspond pas aux informations du modèle correspondant.

3. Appareil auditif selon l'une quelconque des revendications précédentes, dans lequel l'unité de mémoire contient un identifiant d'unité de fabrication (182) stocké à l'intérieur, et dans lequel la vérification des données de modèle est basée sur l'identifiant d'unité de fabrication (182).

4. Procédé (600) de fonctionnement d'un appareil auditif comprenant une unité de traitement configurée pour compenser la perte auditive d'un utilisateur de l'appareil auditif, une unité de mémoire et une interface, l'unité de mémoire dans laquelle est stocké un identifiant d'appareil auditif,

   **caractérisé en ce que**

   l'unité de mémoire comportant des données de modèle comprenant des données d'informations de modèle indicatives de modèles disponibles pour le dispositif auditif qui y sont stockées, les données d'informations de modèle comprenant des premières informations de modèle et une signature numérique, les données de modèle comprenant un nom de modèle et un identifiant de modèle, le procédé comprenant

   - vérifier (S20) les données de modèle, la vérification des données de modèle comprenant la vérification (S23) de la signature numérique des données d'informations de modèle et la vérification des données de modèle (S24), la vérification des données de modèle comprenant l'exécution d'une fonction de vérification basée sur l'audition identifiant de dispositif, le nom de modèle et l'identifiant de modèle, la réalisation de la fonction de vérification comprenant l'application d'une ou plusieurs fonctions de hachage, et la détermination si un critère de vérification basé sur l'identifiant de dispositif auditif, le nom de modèle et l'identifiant de modèle est rempli, dans lequel la vérification des données de modèle échoue si le critère de vérification n'est pas satisfait, le critère de vérification n'étant pas satisfait si le résultat de la fonction de vérification ne correspond pas aux informations de modèle des données d'informations de modèle ;
   - déterminer (S21) si la vérification des données de modèle échoue ; et
   - passer (S22) à un mode de mise à jour de modèle qui est un mode non opérationnel dans lequel le dispositif auditif ne fonctionne pas comme un dispositif auditif, si la vérification des données du modèle échoue.

1

**10**
Client device

**16**
Server
device

24

**14**
Fitting device

22

21

**12**
Manufacturing
device

23

**2**
Hearing Device

# Fig. 1

**Fig. 2**

180

| 186A |
|------|
| 186B |
| 186C |
| 188  |
| 190  |
| 192  |

184

# Fig. 3

400

| 2 Hearing device | 14 Fitting device | 16 Server device |

402

(112)

404

(112, 190)

406

408

(192)

(190, 192)

**Fig. 4**

400A

| 2 Hearing device | 14 Fitting device | 16 Server device |
|---|---|---|

402

(112,180,182) →

404

(112, 182 190) →

406

408

← (192)

← (190, 192)

# Fig. 5

500

```
┌──────────────┐
│      S1      │
└──────────────┘
       │
       ▼
┌──────────────┐
│      S2      │
└──────────────┘
       │
       ▼
┌──────────────┐
│      S3      │
└──────────────┘
       │
       ▼
┌──────────────┐
│      S4      │
└──────────────┘
```

## Fig. 6

500A

**Fig. 7**

**Fig. 8**

600

Fig. 9

**EP 3 113 514 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120140962 A
- US 20100067711 A
- US 20020054689 A
- WO 2007098605 A
- US 6556686 B